# EUROPÄISCHE PATENTSCHRIFT

(11) **EP 2 177 406 B1**
(45) Veröffentlichungstag und Bekanntmachung des Hinweises auf die Patenterteilung: **29.07.2015**
(21) Anmeldenummer: 09168373.0
(22) Anmeldetag: 21.08.2009
(51) Int. Cl.: B60S 1/38

(54) **Anschlussvorrichtung zum gelenkigen Verbinden eines Wischblatts in Flachbalkenbauweise mit einem Wischarm**
Connection device for articulated connection of a wiper blade in flat bar construction with a wiper arm
Dispositif de raccordement pour la liaison articulée d'une lame d'essuyage conçue sous la forme d'une barre plate dotée d'une lame d'essuyage

(30) Priorität: 14.10.2008 DE 102008042839
(43) Veröffentlichungstag der Anmeldung: 21.04.2010
(73) Patentinhaber: Robert Bosch GmbH, 70442 Stuttgart (DE)
(72) Erfinder: Op't Roodt, Inigo, 3500 Hasselt (BE)

(56) Entgegenhaltungen:
- DE-A1- 19 859 077
- DE-A1-102005 060 664
- DE-A1-102006 031 514
- JP-A- 2003 146 190

## Beschreibung

### Stand der Technik

Die Erfindung geht von einer Anschlussvorrichtung nach dem Oberbegriff des Anspruchs 1 aus.

Aus der EP 1 119 478 B1 ist ein Anschlusselement zum gelenkigen Verbinden eines Wischblatts in Flachbalkenbauweise mit einem Wischarm bekannt. Das Wischblatt besitzt eine Wischleiste, die von einem flachen, im Querschnitt rechteckigen Tragelement in Form einer vorgekrümmten Federschiene gehalten ist. Die Federschiene steht seitlich ein Stück weit über eine Kopfleiste der Wischleiste vor. Im mittleren Bereich des Tragelements ist das Anschlusselement mit Krallen befestigt, die an einem Boden des Anschlusselements angeformt sind und mit Füßen das Tragelement auf der Seite, die dem Boden abgewandt ist, umgreifen. Im Bereich der Krallen sind im Boden quer verlaufende Sicken eingepresst, die auf der dem Tragelement zugewandten Seite des Bodens abgerundete Erhebungen ergeben. Diese dienen als Stützlager für das Tragelement und sorgen für einen ausreichenden Abstand zwischen dem Tragelement und dem Boden, sodass das Tragelement im unbelasteten Zustand eine der Vorkrümmung entsprechende Form einnehmen kann. In Längsrichtung ragen die Enden des Bodens ein Stück weit über die Krallen hinaus. An den Längsseiten des Bodens sind zwischen den Krallen Seitenwände entgegengesetzt zu den Krallen abgewinkelt. Die Seitenwände tragen als Lagerelement einen Gelenkstift. Das Anschlusselement kann aus unbiegsamem Kunststoff oder aus Stahl geformt werden.

Aus der DE 100 65 124 A1 ist ein Wischblatt in Flachbalkenbauweise mit einem Anschlusselement zum gelenkigen Verbinden des Wischblatts mit einem Wischarm bekannt. Als Tragelement sind zwei parallel verlaufende Federschienen mit einem flachen, rechteckigen Querschnitt in zwei seitliche Längsnuten einer Wischleiste eingesetzt. Das Anschlusselement besitzt eine Längsrippe, die als Lagerelement zwei seitliche Lagerzapfen trägt. An der Längsrippe sind Krallen angeformt, die das Tragelement seitlich umfassen.

Aus der DE 102 59 480 A1 ist ein Wischblatt in Flachbalkenbauweise bekannt, das über ein Anschlusselement nach dem Sidelock-Prinzip gelenkig mit einem Wischarm verbunden ist. Das Anschlusselement ist mit Krallen an einem Tragelement in Form zweier parallel verlaufender Federschienen befestigt und besitzt zwei Seitenwände, die als Lagerelement eine Nabe tragen. In dieser ist ein Lagerstift des Wischarms schwenkbar gelagert.

Aus der DE 10 2005 060 664 A1 ist ein Wischblatt in Flachbalkenbauweise mit einer Anschlussvorrichtung bekannt, die die Merkmale des Oberbegriffes des Anspruchs 1 offenbart.

### Offenbarung der Erfindung

Nach der Erfindung ist zwischen dem Boden und dem Tragelement ein Basiselement angeordnet, das an seiner dem Tragelement zugewandten Seite eine in Längsrichtung des Tragelements gekrümmte Anlagefläche aufweist, deren Krümmung ungefähr der Vorkrümmung des Tragelements entspricht. Zweckmäßigerweise ist der Krümmungsradius der gekrümmten Anlagefläche kleiner oder gleich dem Krümmungsradius des Tragelements. Dadurch kann das Tragelement in unbelastetem Zustand die Form annehmen, die seiner Vorkrümmung entspricht, während es sich im Betrieb streckt und von der gekrümmten Anlagefläche abhebt. Dabei stützt sich das Tragelement zweckmäßigerweise an den Enden des Basiselements ab. Das Basiselement, das die Verbindung zwischen dem Anschlusselement und dem Tragelement herstellt, kann dem jeweiligen Einsatzfall angepasst werden, sodass unterschiedliche Anschlusselemente mit wenig Änderungsaufwand an gleiche oder unterschiedliche Wischblätter angepasst werden können.

Gemäß einer Ausgestaltung besitzt das Basiselement an seinen Enden jeweils eine quer verlaufende Stützkante für das Tragelement. Diese ist zweckmäßigerweise abgerundet. Um die Flächenpressung im Bereich der Kraftübertragung auf das Tragelement zu verringern und somit den Verschleiß gering zu halten, kann es vorteilhaft sein, dass das Basiselement an seinen Enden jeweils eine Anlagefläche für das Tragelement hat, die etwa parallel zum Boden verläuft. Wird diese Fläche geringfügig in Längsrichtung ballig gestaltet, wird die Flächenpressung zwar geringfügig erhöht, jedoch ergibt sich bei einer günstigen Fixierung in Längsrichtung eine weitgehend zwangsfreie Ausrichtung an verschiedene Krümmungen des Tragelements. Gemäß einer weiteren Ausgestaltung der Erfindung wird vorgeschlagen, dass die Anlagefläche eine die Haftung erhöhende Oberflächenstruktur aufweist, z.B. quer verlaufende Riffelungen, Aufrauungen oder dgl.

Besitzt das Wischblatt ein Tragelement in Form zweier parallel verlaufender Federschienen, ist es zweckmäßig, dass die gekrümmte Anlagefläche durch eine Längsnut unterteilt ist, die einen Freiraum zur Aufnahme einer Kopfleiste der Wischleiste bildet. Ferner kann das Basiselement in vorteilhafter Weise in Querrichtung mindestens zwei Abstandsnocken besitzen, die in in Längsrichtung des Tragelements verlaufende Langlöcher der Federschienen eingreifen und somit deren Abstand zueinander im Bereich des Anschlusselements bestimmen, während die Langlöcher eine Verschiebung auf Grund unterschiedlicher Krümmung und einen Toleranzausgleich in Längsrichtung zulassen.

Gemäß einer weiteren Ausgestaltung der Erfindung besitzt das Basiselement an seinen Längsseiten vorspringende Seitenführungen, deren in Längsrichtung weisende Stirnseiten zwischen die jeweils angeordneten Krallen des Anschlusselements passen. Somit ist zum einen das Tragelement zwischen den Seitenführungen des Basiselements geführt, andererseits ist das Basiselement in Längsrichtung relativ zum Anschlusselement fixiert. Dies kann auch dadurch erreicht werden, dass die Seitenführungen des Basiselements zum Boden des Anschlusselements Aussparungen aufweisen, in die vom Boden zum Tragelement hin abgewinkelte Seitenwangen des Anschlusselements passen.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination.

Es zeigen:

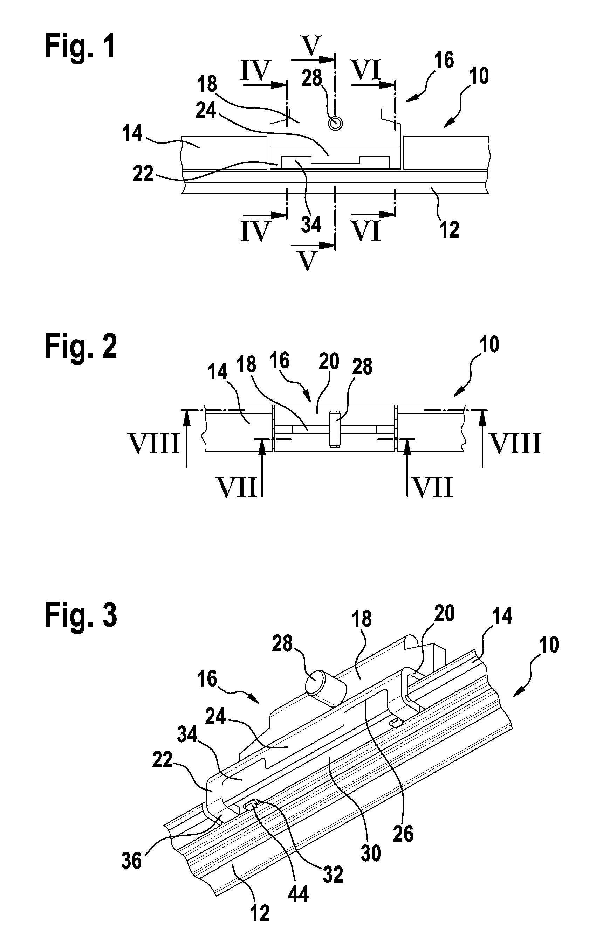

- Fig. 1: eine Teilseitenansicht eines Wischblatts mit einer erfindungsgemäßen Anschlussvorrichtung,
- Fig. 2: eine Draufsicht eines Wischblatts nach Fig. 1,
- Fig. 3: eine perspektivische Ansicht eines Wischblatts nach Fig. 1 von unten,

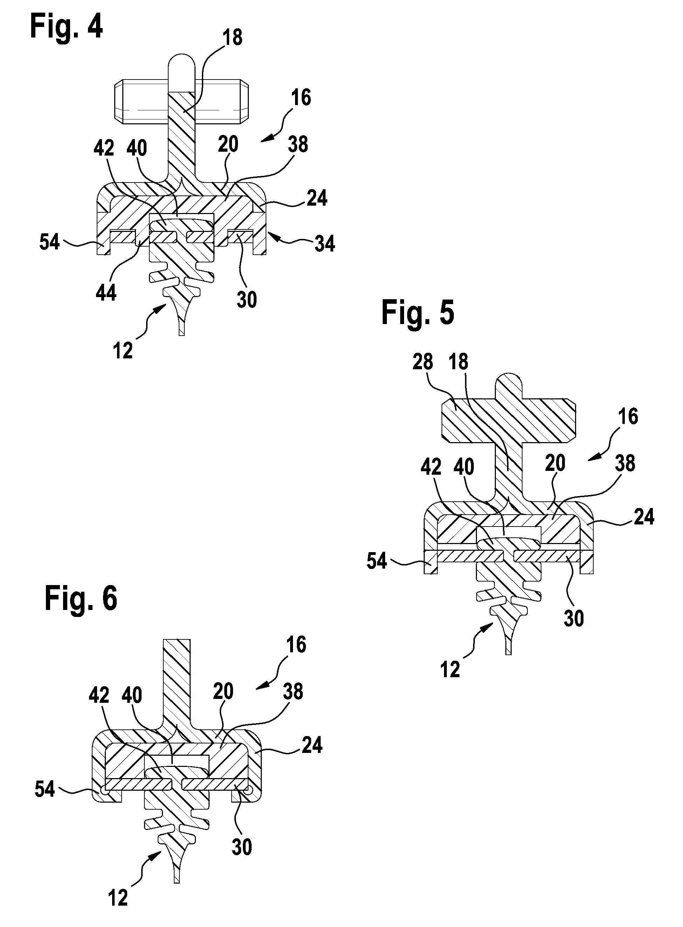

- Fig. 4: einen Schnitt entsprechend der Linie IV-IV in Fig. 1,
- Fig. 5: einen Schnitt entsprechend der Linie V-V in Fig. 1,
- Fig. 6: einen Schnitt entsprechend der Linie VI-VI in Fig. 1,
- Fig. 7: einen Schnitt entsprechend der Linie VII-VII in Fig. 2,
- Fig. 8: einen Schnitt entsprechend der Linie VIII-VIII in Fig.2,
- Fig. 9: eine Einzelheit entsprechend der Linie IX in Fig. 8,
- Fig. 10: bis Fig. 12 Varianten zur Fig. 9,

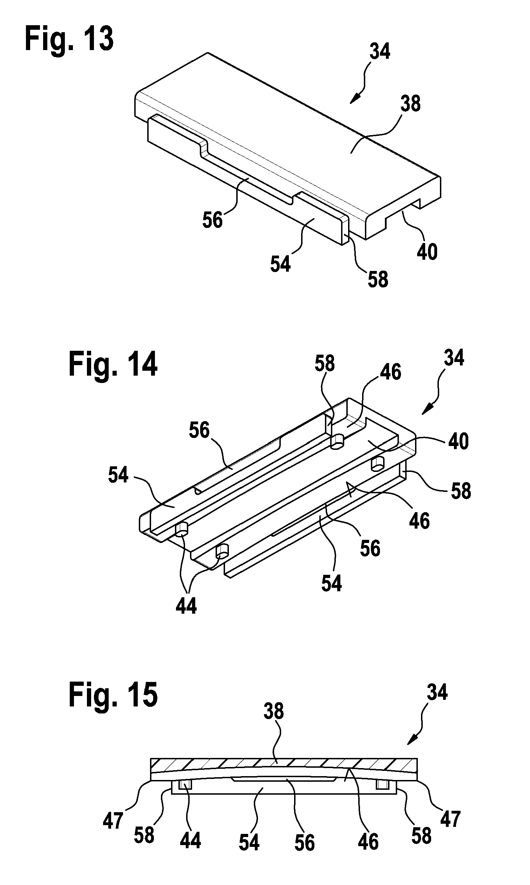

- Fig. 13: eine perspektivische Ansicht eines Basiselements von oben,
- Fig. 14: eine perspektivische Ansicht eines Basiselements von unten und
- Fig. 15: einen Schnitt entsprechend der Linie XV-XV in Fig. 13.

Ein Wischblatt 10, von dem in den Figuren nur der mittlere Teil mit einem Anschlusselement 16 dargestellt ist, besitzt eine Wischleiste 12 mit einer Kopfleiste 42, in deren seitlichen Längsnuten als Tragelement 30 zwei parallel verlaufende Federschienen mit einem flachen rechteckigen Querschnitt eingesetzt sind. Die Federschienen 30 sind in Längsrichtung vorgekrümmt, sodass sie unter Belastung durch einen nicht dargestellten Wischarm die Anpresskraft in geeigneter Form über die Länge der Wischleiste 12 verteilen.

Das Anschlusselement 16 dient zum gelenkigen Verbinden des Wischblatts 10 mit dem Wischarm. Es besitzt einen die Federschienen 30 übergreifenden Boden 20 mit einer Längsrippe 18, die zwei seitliche Lagerzapfen als Lagerelement 28 aufweist. Anstelle der Längsrippe 18 können auch Seitenwände das Lagerelement 28 tragen. Dieses kann auch als Nabe ausgebildet sein. In Längsrichtung ist zu beiden Seiten des Anschlusselements 16 ein Spoiler 14 angeordnet.

Im Bereich der Enden des Anschlusselements 16 sind an den Boden 20 zu den Federschienen 30 hin abgewinkelte Krallen 22 vorgesehen, die mit ihren Füßen 36 die Federschienen 30 auf der vom Boden 20 abgewandten Seite umfassen und gegen ein Basiselement 34 drücken, das zwischen den Federschienen 30 und dem Boden 20 des Anschlusselements 16 angeordnet ist. An der inneren Kante zwischen den Krallen 22 und den Füßen 36 befindet sich zur Biegeerleichterung jeweils eine Hohlkehle 60.

Das Basiselement 34 liegt mit einer Decke 38 an der zum Tragelement 30 weisenden Seite des Bodens 20 an. An der dem Boden 20 abgewandten Seite des Basiselements 34 besitzt dieses zwei in Längsrichtung gekrümmte Anlageflächen 46, die durch eine Längsnut 40 voneinander getrennt sind. Die Längsnut 40 ergibt einen ausreichenden Freiraum für die Kopfleiste 42 der Wischleiste 12. Die gekrümmten Flächen 46 sind auf die Federschienen 30 so abgestimmt, dass diese im unbelasteten Zustand zwangsfrei ihre vorgekrümmte Form annehmen können.

Die Federschienen 30 werden durch Abstandsnocken 44, die in in Längsrichtung der Federschienen 30 angeordnete Langlöcher 32 eingreifen, quer zur Längsrichtung auf Distanz gehalten und können zusätzlich außen durch Seitenführungen 54 geführt werden, die an den Seiten des Basiselements 34 etwas vorspringen und in Längsrichtung um die Breite der Krallen 22 kürzer sind als das Basiselement 34, sodass sie mit ihren in Längsrichtung weisenden Stirnseiten 58 zwischen die zugeordneten Krallen 22 passen. An der zum Boden 20 weisenden Seite der Seitenführungen 54 sind Aussparungen 56 vorgesehen, in die Seitenwangen 24 des Anschlusselements 16 passen, wodurch das Basiselement 34 zusätzlich oder anstatt der Stirnseite 58 relativ zum Anschlusselement 16 in Längsrichtung fixiert werden kann. In Längsrichtung zu beiden Seiten der Seitenwangen 24 sind Aussparungen 26 vorgesehen, in die die zum Boden 20 vorstehenden Teile der Seitenführungen 54 passen.

Das Tragelement 30 in Form der Federschienen wird an den Enden des Basiselements 34 zwischen den Füßen 36 der Krallen 22 und einer quer verlaufenden Stützkante 47 des Basiselements 34 gehalten, wobei die Stützkante 47 zweckmäßigerweise abgerundet ist. Somit kann sich das Tragelement 30 zwischen den Füßen 36 weitgehend zwangsfrei in seiner Krümmung der Belastung anpassen.

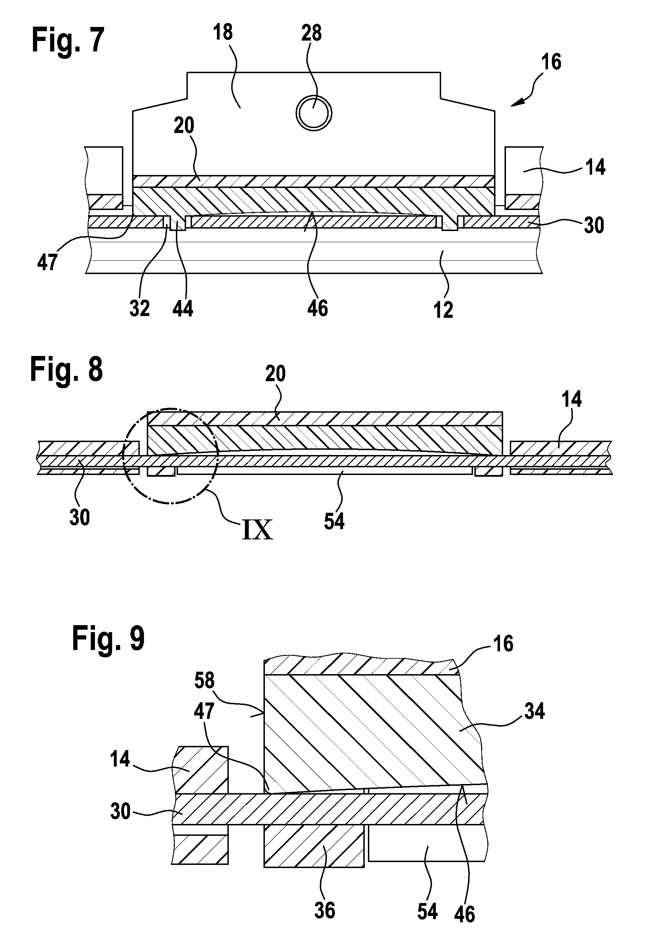

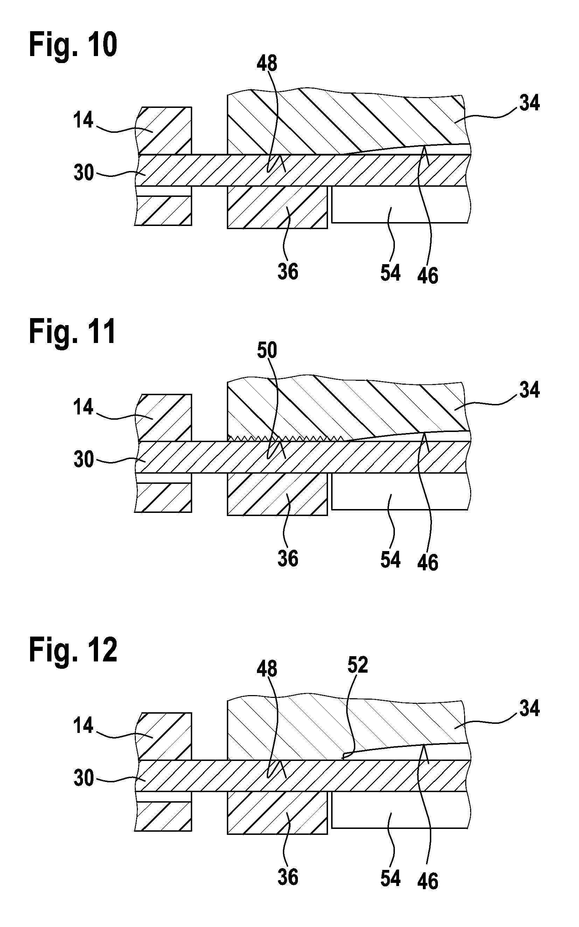

Die Fig. 10 bis 12 zeigen Ausgestaltungen der Anlageflächen 48 und 50 des Basiselements 34 im Bereich der Füße 36. Gegenüber der Ausführung nach Fig. 9 liegt die Federschiene 30 in Längsrichtung an einem längeren Bereich des Basiselements 34 an, wodurch sich eine geringere Flächenpressung zwischen der Federschiene 30 und dem Basiselement 34 ergibt. Dabei kann die Anlagefläche 48 geringfügig ballig in Längsrichtung ausgeführt werden. Bei der Ausgestaltung nach Fig. 11 weist die Anlagefläche 50 eine die Reibkraft erhöhende Struktur auf, und zwar eine quer zur Längsrichtung verlaufende Riffelung. Es können aber auch andere Oberflächenstrukturen verwendet werden, die eine gleiche oder ähnliche Wirkung besitzen, z.B. Aufrauungen, Beschichtungen oder dgl.

Bei den Ausführungen nach den Fig. 10 und 11 geht die Anlagefläche 48, 50 mit einem Knick in die gekrümmte Anlagefläche 46 über, während bei der Ausführung nach Fig. 12 zwischen der Anlagefläche 48 und der gekrümmten Anlagefläche 46 eine Stufe 52 angeordnet ist, sodass sich in dem Längsabschnitt zwischen den benachbarten Anlageflächen 48 ein höherer Freiraum für die Durchbiegung der Federschienen 30 ergibt.

## Patentansprüche

1. Anschlussvorrichtung mit einem Anschlusselement (16), einem Basiselement (34) und einem vorgekrümmtenTragelement (30), wobei das Anschlusselement (16) zum gelenkigen Verbinden eines Wischblatts (10) in Flachbalkenbauweise mit einem Wischarm vorgesehen ist, wobei ein Boden (20) des Anschlusselements (16) in Längsrichtung des vorgekrümmten Tragelements (30) verläuft und seitlich angeformte Krallen (22) aufweist, die mit abgewinkelten Füßen (36) das Tragelement (30) auf einer dem Boden (20) abgewandten Seite umfassen, wobei zwischen dem Boden (20) und dem Tragelement (30) das Basiselement (34) angeordnet ist, **dadurch gekennzeichnet, dass** das Basiselement (34) an seiner dem Tragelement (30) zugewandten Seite eine in Längsrichtung des Tragelements (30) gekrümmte Anlagefläche (46) aufweist, deren Krümmung ungefähr der Vorkrümmung des Tragelements (30) entspricht.

2. Anschlussvorrichtung nach Anspruch 1, **dadurch gekennzeichnet, dass** das Basiselement (34) an seinen Enden jeweils eine quer verlaufende Stützkante (47) für das Tragelement (30) besitzt.

3. Anschlussvorrichtung nach Anspruch 2, **dadurch gekennzeichnet, dass** die Stützkante (47) für das Tragelement (30) abgerundet ist.

4. Anschlussvorrichtung nach Anspruch 1, **dadurch gekennzeichnet, dass** das Basiselement (34) an seinen Enden jeweils eine Anlagefläche (48, 50) für das Tragelement (30) hat, die etwa parallel zum Boden (20) verläuft.

5. Anschlussvorrichtung nach Anspruch 4, **dadurch gekennzeichnet, dass** die Anlagefläche (48, 50) in Längsrichtung ballig ausgeführt ist.

6. Anschlussvorrichtung nach einem der Ansprüche 4 oder 5, **dadurch gekennzeichnet, dass** die Anlagefläche (50) eine die Haftung erhöhende Oberflächenstruktur aufweist.

7. Anschlussvorrichtung nach einem der Ansprüche 4 bis 6, **dadurch gekennzeichnet, dass** zwischen den Anlageflächen (48, 50) und der gekrümmten Anlagefläche (46) eine Stufe (52) vorgesehen ist.

8. Anschlussvorrichtung nach einem der vorhergehenden Ansprüche für ein Tragelement (30) mit zwei parallel verlaufenden Federschienen, **dadurch gekennzeichnet, dass** die gekrümmte Anlagefläche (46) durch eine Längsnut (40) unterteilt ist, die einen Freiraum zur Aufnahme einer Kopfleiste (42) der Wischleiste (12) bildet.

9. Anschlussvorrichtung nach Anspruch 8, **dadurch gekennzeichnet, dass** das Basiselement (30) in Querrichtung mindestens zwei Abstandsnocken (44) besitzt, die in in Längsrichtung verlaufende Langlöcher (32) der Federschienen eingreifen.

10. Anschlussvorrichtung nach einem der vorhergehenden Ansprüche, **dadurch gekennzeichnet, dass** das Basiselement (34) an seinen Längsseiten vorspringende Seitenführungen (54) besitzt, deren in Längsrichtung weisende Stirnseiten (58) zwischen die jeweils zugeordneten Krallen (22) des Anschlusselements (16) passen.

11. Anschlussvorrichtung nach Anspruch 10, **dadurch gekennzeichnet, dass** die Seitenführungen (54) des Basiselements (34) zum Boden (20) des Anschlusselements (16) Aussparungen (56) aufweisen, in die vom Boden (20) zum Tragelement (30) hin abgewinkelte Seitenwangen (24) passen.

12. Wischblatt (10) **gekennzeichnet durch** eine Anschlussvorrichtung nach einem der vorhergehenden Ansprüche.

## Claims

1. Connection device with a connection element (16), a base element (34) and a precurved supporting element (30), wherein the connection element (16) is provided for the articulated connection of a wiper blade (10) in flat bar construction to a wiper arm, wherein a base (20) of the connection element (16) runs in the longitudinal direction of the precurved supporting element (30) and has claws (22) which are integrally formed laterally thereon and, with bent feet (36), surround the supporting element (30) on a side facing away from the base (20), wherein the base element (34) is arranged between the base (20) and the supporting element (30), **characterized in that** the base element (34) has, on the side thereof facing the supporting element (30), a contact surface (46) which is curved in the longitudinal direction of the supporting element (30) and the curvature of which approximately corresponds to the precurvature of the supporting element (30).

2. Connection device according to Claim 1, **characterized in that** the base element (34) has, at each of the ends thereof, a transversely running support edge (47) for the supporting element (30).

3. Connection device according to Claim 2, **characterized in that** the support edge (47) for the supporting element (30) is rounded.

4. Connection device according to Claim 1, **characterized in that** the base element (34) has, at each of the ends thereof, a respective contact surface (48, 50) for the supporting element (30), the contact surface running approximately parallel to the base (20).

5. Connection device according to Claim 4, **characterized in that** the contact surface (48, 50) is of spherical design in the longitudinal direction.

6. Connection device according to either of Claims 4 and 5, **characterized in that** the contact surface (50) has an adhesion-increasing surface structure.

7. Connection device according to one of Claims 4 to 6, **characterized in that** a step (52) is provided between the contact surfaces (48, 50) and the curved contact surface (46).

8. Connection device according to one of the preceding claims for a supporting element (30) with two spring rails running in parallel, **characterized in that** the curved contact surface (46) is divided by a longitudinal groove (40) which forms a clearance for receiving a head strip (42) of the wiper strip (12).

9. Connection device according to Claim 8, **characterized in that** the base element (30) has, in the transverse direction, at least two spacer cams (44) which engage in elongated holes (32), which run in the longitudinal direction, in the spring rails.

10. Connection device according to one of the preceding claims, **characterized in that** the base element (34) has side guides (54) which project on the longitudinal sides thereof and the end sides (58) of which, which face in the longitudinal direction, fit between the respectively assigned claws (22) of the connection element (16).

11. Connection device according to Claim 10, **characterized in that** the side guides (54) of the base element (34) have recesses (56) towards the base (20) of the connection element (16), into which recesses side members (24) bent from the base (20) towards the supporting element (30) fit.

12. Wiper blade (10) **characterized by** a connection device according to one of the preceding claims.

## Revendications

1. Dispositif de raccordement comprenant un élément de raccordement (16), un élément de base (34) et un élément de support pré-courbé (30), l'élément de raccordement (16) étant prévu pour la liaison articulée d'un balai d'essuie-glace (10) de construction en forme de barre plate à un bras d'essuie-glace, un fond (20) de l'élément de raccordement (16) s'étendant dans la direction longitudinale de l'élément de support pré-courbé (30) et comprenant des griffes (22) formées latéralement qui entourent, par des pieds coudés (36), l'élément de support (30) sur un côté opposé au fond (20), l'élément de base (34) étant disposé entre le fond (20) et l'élément de support (30), **caractérisé en ce que** l'élément de base (34) présente, sur son côté tourné vers l'élément de support (30), une surface d'appui (46) courbée dans la direction longitudinale de l'élément de support (30), la courbure de celle-ci correspondant approximativement à la pré-courbure de l'élément de support (30).

2. Dispositif de raccordement selon la revendication 1, **caractérisé en ce que** l'élément de base (34) présente, à ses extrémités, à chaque fois une arête de support (47) s'étendant transversalement pour l'élément de support (30).

3. Dispositif de raccordement selon la revendication 2, **caractérisé en ce que** l'arête de support (47) pour l'élément de support (30) est arrondie.

4. Dispositif de raccordement selon la revendication 1, **caractérisé en ce que** l'élément de base (34) a, à ses extrémités, à chaque fois une surface d'appui (48, 50) pour l'élément de support (30), laquelle s'étend approximativement parallèlement au fond (20).

5. Dispositif de raccordement selon la revendication 4, **caractérisé en ce que** la surface d'appui (48, 50) est réalisée de manière bombée dans la direction longitudinale.

6. Dispositif de raccordement selon l'une quelconque des revendications 4 ou 5, **caractérisé en ce que** la surface d'appui (50) présente une structure de surface augmentant l'adhérence.

7. Dispositif de raccordement selon l'une quelconque des revendications 4 à 6, **caractérisé en ce qu'**un gradin (52) est prévu entre les surfaces d'appui (48, 50) et la surface d'appui (46) courbée.

8. Dispositif de raccordement selon l'une quelconque des revendications précédentes pour un élément de support (30) comprenant deux rails élastiques s'étendant parallèlement, **caractérisé en ce que** la surface d'appui (46) courbée est divisée par une rainure longitudinale (40) qui forme un espace libre pour recevoir une raclette de tête (42) de la raclette de balai d'essuie-glace (12).

9. Dispositif de raccordement selon la revendication 8, **caractérisé en ce que** l'élément de base (30) présente au moins deux ergots d'espacement (44) dans la direction transversale, lesquels viennent en prise dans des trous oblongs (32), s'étendant dans la direction longitudinale, des rails élastiques.

10. Dispositif de raccordement selon l'une quelconque des revendications précédentes, **caractérisé en ce que** l'élément de base (34) présente des guides latéraux (54) saillant sur ses côtés longitudinaux, dont les côtés frontaux (58) orientés dans la direction longitudinale s'adaptent entre les griffes (22) respectivement associées de l'élément de raccordement (16).

11. Dispositif de raccordement selon la revendication 10, **caractérisé en ce que** les guides latéraux (54) de l'élément de base (34) présentent des évidements (56) vers le fond (20) de l'élément de raccordement (16), dans lesquels évidements s'adaptent des joues latérales (24) coudées à partir du fond (20) vers l'élément de support (30).

12. Balai d'essuie-glace (10), **caractérisé par** un dispositif de raccordement selon l'une quelconque des revendications précédentes.
